# EUROPEAN PATENT SPECIFICATION

(11) **EP 2 689 957 B1**
(45) Date of publication and mention of the grant of the patent: **30.03.2016**
(21) Application number: 13177158.6
(22) Date of filing: 19.07.2013
(51) Int. Cl.: B60P 1/08, B60P 3/06, B60P 3/12

(54) **Trailer**
Anhänger
Remorque

(30) Priority: 24.07.2012 IT VR20120154
(43) Date of publication of application: 29.01.2014
(73) Proprietor: Tebaldi, Francesco Luciano, 37047 San Bonifacio (VR) (IT)
(72) Inventor: Tebaldi, Francesco Luciano, 37047 San Bonifacio (VR) (IT)
(74) Representative: Modiano, Micaela Nadia

(56) References cited:
- WO-A1-2009/055826
- US-A- 3 215 296
- US-A- 3 346 131
- US-A- 5 366 336
- US-A1- 2001 026 753
- US-A1- 2003 044 265

## Description

The present invention relates to a trailer and, specifically, a trailer for transporting vehicles of considerable size such as lorry tractors or coaches following, for example, roadside recovery operations.

In cases where it is intended to load, on trailers and, frequently, on semitrailers, vehicles of considerable size such as lorries, coaches and the like, it is necessary to use trailers or semitrailers with a chassis which defines a depressed deck which has, at its rear end, a rear axle which is supported by an abutment element which extends above the depressed deck.

In order to be capable of loading the vehicle it is thus necessary to detach the semitrailer from the tractor and perform the loading from the front end of the chassis.

This determines extremely lengthy loading times in addition to the necessity of having a sufficiently ample area available for performing all the maneuvers.

Alternatively, trailers have been proposed in which the abutment element that supports the rear axle can be manually detached from the rear end of the chassis and moved, by way of user intervention, in order to allow the loading of the vehicle directly from the rear end of the chassis.

In this case too, however, there is a high level of complexity in the detaching, moving and reattaching operations, which determine the need for lengthy timescales and the contribution of several persons.

Moreover, such solution can be implemented only on trailers in which the abutment element supports two axles that are arranged parallel and spaced apart in the direction of longitudinal extension of the chassis. Similar trailers are known from US 2001/0026753 and US 3215296.

The aim of the present invention is to eliminate, or at least to drastically reduce, the above mentioned drawbacks suffered in conventional trailers.

Within this aim, an object of the invention is to provide a trailer which makes it possible to load vehicles of great size extremely rapidly.

Another object of the invention is to provide a trailer which has a low production cost so as to render its use advantageous from an economical viewpoint as well.

This aim and these and other objects which will become better apparent hereinafter are achieved by a trailer according to appended claim 1.

Further characteristics and advantages of the invention will become better apparent from the description of some preferred, but not exclusive, embodiments of a method for the production of a trailer according to the invention, illustrated by way of non-limiting example in the accompanying drawings wherein:

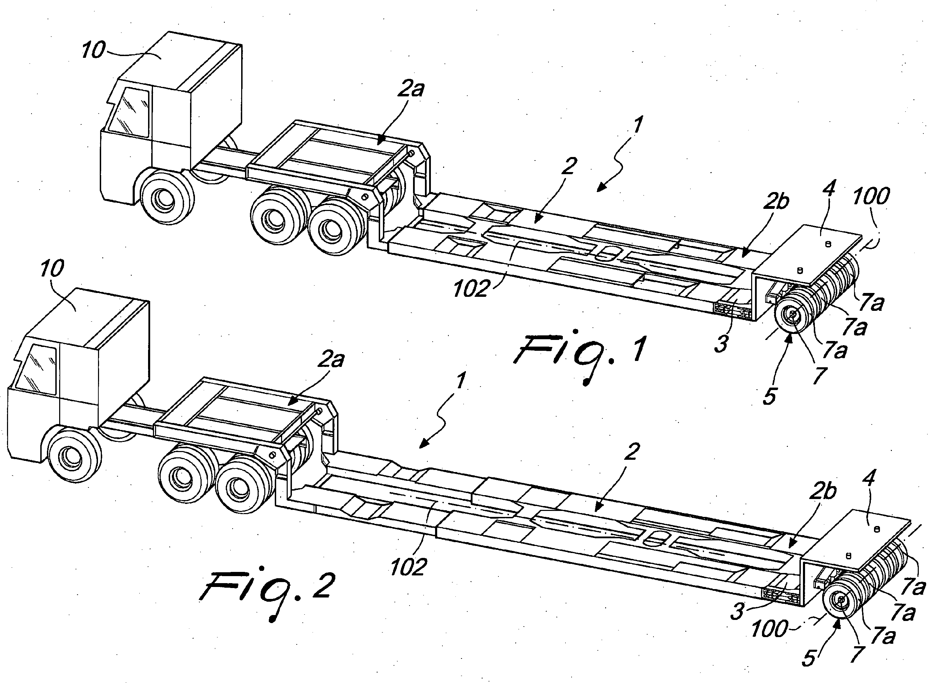

Figures 1 and 2 are perspective views of a semitrailer associated with a tractor;
Figure 3 is an enlarged-scale perspective view of the rear end of the semitrailer according to the invention;
Figures 4 to 9 are rear elevation views which show, in sequence, the semitrailer during the transition of the rear support element from the transport position to the loading position;
Figures 10 to 13 are perspective views which show, in sequence, the depressed loading deck and part of the supporting assembly during its lateral movement;
Figures 14 and 15 are side views of the wheel assembly in which the axle is, respectively, arranged close to and away from the upper region of the rear supporting assembly.

The present invention relates to a trailer, for the transport of vehicles and, in particular, for the recovery of vehicles of considerable size such as lorries, coaches and the like.

Advantageously, the trailer comprises a semitrailer 1 and has a supporting chassis 2 which can be associated, at its front region 2a, with a tractor 10.

The supporting chassis 2 further defines, at its rear region 2b, a depressed loading deck 3 which is associated with a respective rear supporting assembly 4 for at least one wheel assembly 5.

According to the present invention, the semitrailer 1 comprises movement means 6 which are adapted to move, on command, the rear supporting assembly 4 with respect to the chassis 2 in order to pass between a transport position, in which the rear supporting assembly 4 defines a rear abutment which is extended above the depressed loading deck 3, and a loading position, in which the rear supporting assembly 4 is arranged laterally to the depressed loading deck 3 in order to allow the loading of a vehicle to be transported on the chassis 2.

Advantageously, the wheel assembly 5 comprises at least one axle 7 which supports at least two wheels 7a.

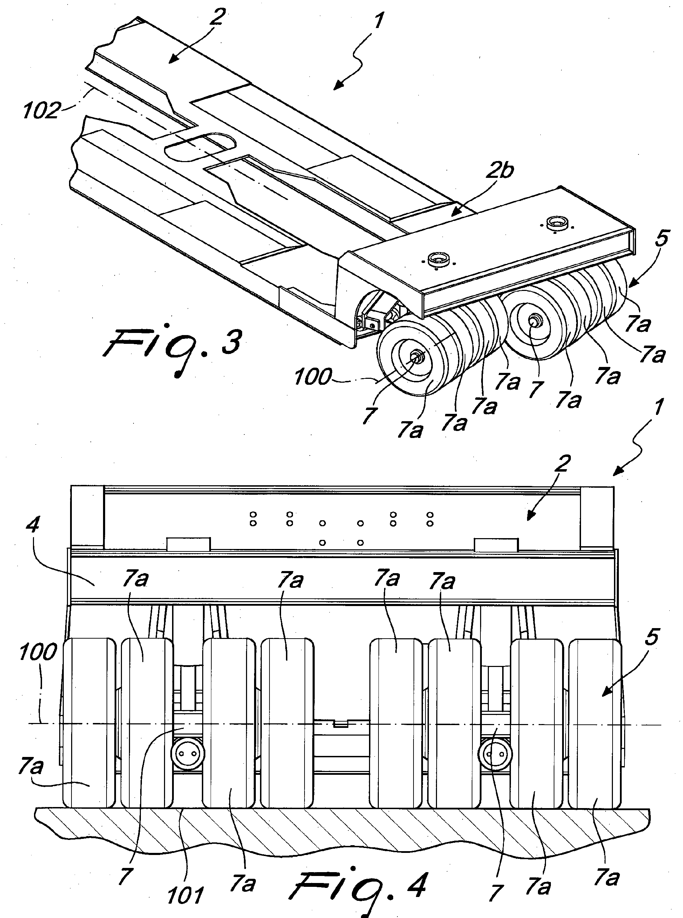

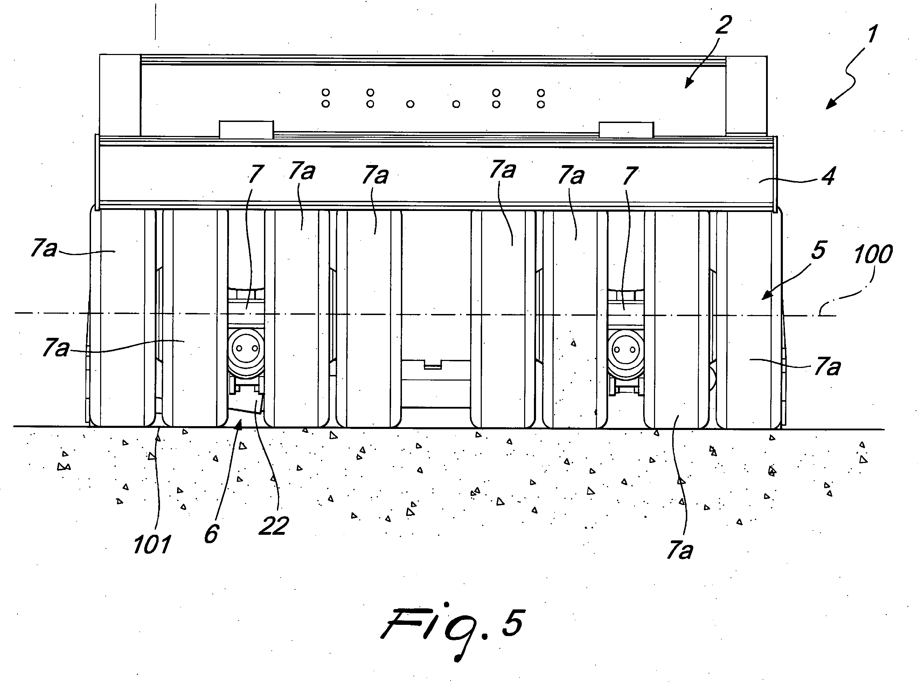

More in detail, when the rear supporting assembly 4 is in the transport position, the axle 7 or axles 7 have their direction of extension 100 which lies parallel to the ground 101 and substantially at right angles to the direction of longitudinal extension 102 of the chassis 2 (as shown in Figures 4 and 5).

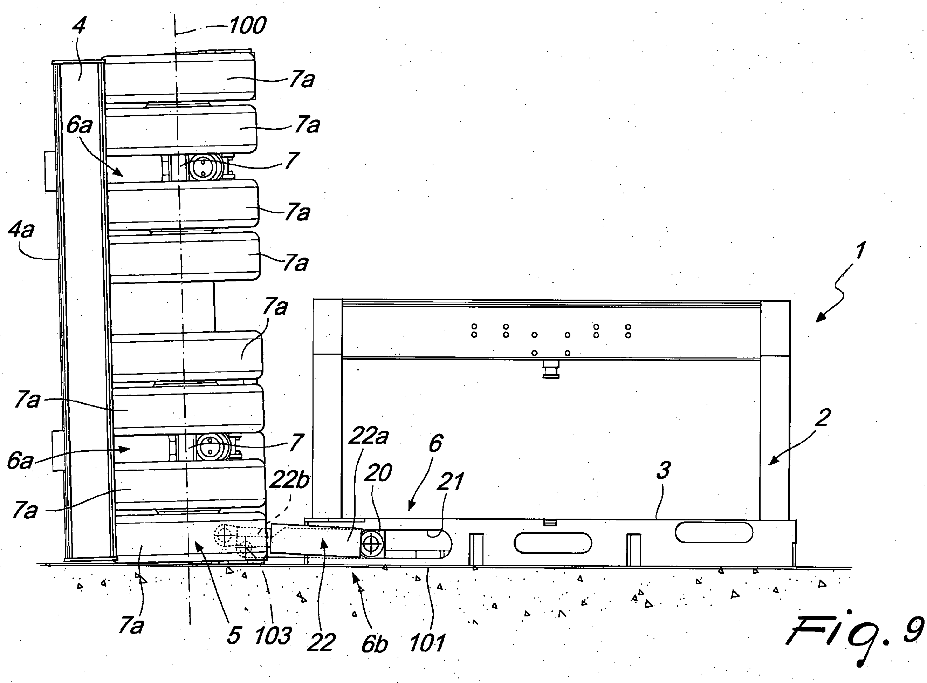

Conveniently, when the rear supporting assembly 4 is brought to the loading position, the axle or axles 7 have their direction of extension 100 which lies substantially at right angles to the ground 101 and substantially at right angles to the direction of longitudinal extension 102 of the chassis 2 (as shown in Figure 9).

According to the present invention, movement means 6 comprise first movement means 6a, which are constituted for example by fluid-operated actuation cylinders, which act between the rear supporting assembly 4 and the wheel assembly 5 and are adapted to move on command the axle or axles 7 toward/away from an upper region 4a of the rear supporting assembly 4, and second movement means 6b which act between the rear supporting assembly 4 and the chassis 2 and are adapted to move laterally to the depressed loading deck 3 the rear supporting assembly 4 with the axle 7 or axles 7 raised.

Advantageously, the second movement means 6b comprise a movement element which is adapted to rotate the rear supporting assembly 4 with respect to the chassis 2 about a pivoting axis 103 which is substantially parallel to the axis of longitudinal extension 102 of the chassis 2.

The second movement means 6b can comprise, as an alternative to or in addition to the movement element, a movement device which is adapted to translate the rear supporting assembly 4 along the direction of extension 100 of the axle 7.

Preferably, the second movement means 6b comprise both the movement element and the movement device.

Conveniently, the movement device comprises first actuation means 30 which act between the chassis 2 and a supporting cradle or plate 32 of the rear supporting assembly 4, while the movement element comprises second actuation means 22 which act between the supporting cradle or plate 32 and an engagement region which is defined on the rear supporting assembly 4 and spaced from the pivoting axis 103.

The first actuation means 30 can be constituted by a fluid-operated actuation cylinder 31 which has the cylinder body 31 a integral with the chassis 2 and a stem 31b which is connected to a first lateral shoulder 32a of the supporting cradle or plate 32.

Advantageously, in order to distribute the action of the fluid-operated actuation cylinder 31 along the entire transverse extension of the supporting cradle or plate 32, it is possible to have kinematic connection means 33 between the first lateral shoulder 32a and a second lateral shoulder 32b.

Such kinematic connection means 33 can be constituted by a first and a second rack 34a and 34b which are integral with the first lateral shoulder 32a and with the second lateral shoulder 32b and which mesh with a respective gearwheel 35a and 35b which is keyed on the free ends of a motion transfer shaft 36.

Conveniently, the second actuation means 22 can be constituted by a fluid-operated actuation cylinder in which the cylinder body 22a is pivoted, conveniently at an end portion thereof, to a pivot 20 which is defined on the supporting cradle or plate 32, and the stem 22b is coupled rotatably to a connecting portion which is defined on the rear supporting assembly 4 and is integral with the wheel assembly 5.

According to a practical embodiment, the pivot 20 is slideable, during the action of the first actuation means 30, inside a guiding slot 21 which is defined at the rear region 2b of the supporting chassis 2 and which extends parallel to the direction of extension 100 of the axles 7.

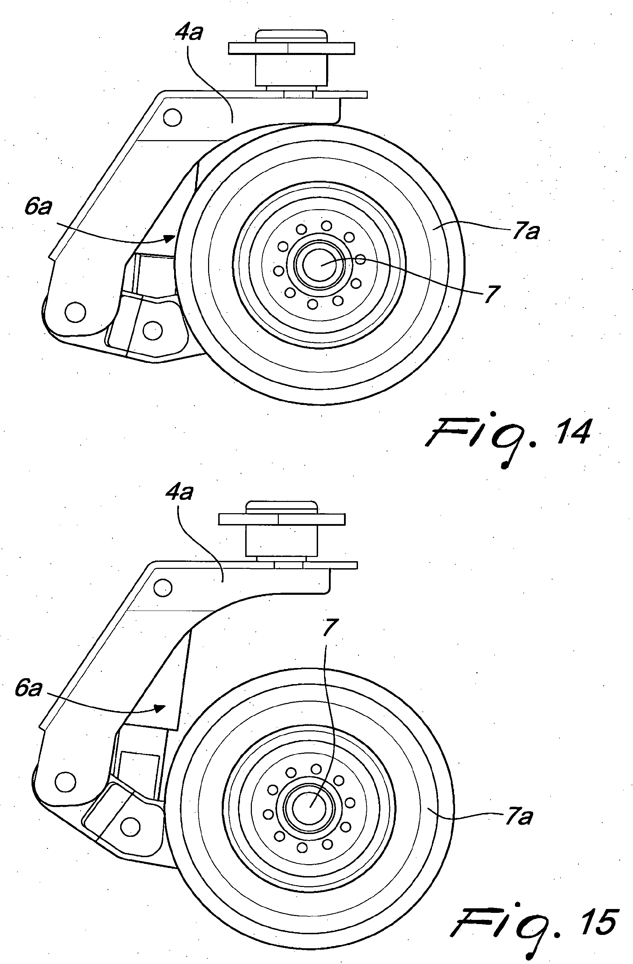

With reference to Figures 14 and 15, it has been found to be particularly advantageous to arrange the first movement means 6a, which are specifically constituted by fluid-operated actuation cylinders, so that, in the transport position, they are arranged in front of the wheel assembly 5.

This makes it possible, in fact, to position the wheels 7a that are arranged on opposite sides with respect to the first movement means 6a closer with respect to the classic situation in which the first movement means 6a (in practice, the suspensions) are arranged between the wheels and, as a consequence, it is possible to associate two axles 7 with the trailer or with the semitrailer 1, each one of which supports four wheels 7a.

Use of a semitrailer 1 for transporting vehicles according to the invention is the following.

If it is necessary to load a vehicle, for example a truck, onto the supporting chassis 2, we proceed, firstly, to actuate the first movement means 6a, thus bringing the axles 7 closer to the upper region 4a of the rear supporting assembly 4 and causing, consequently, the depressed loading deck 3 to rest on the ground (see the sequence shown in Figures 4 and 5).

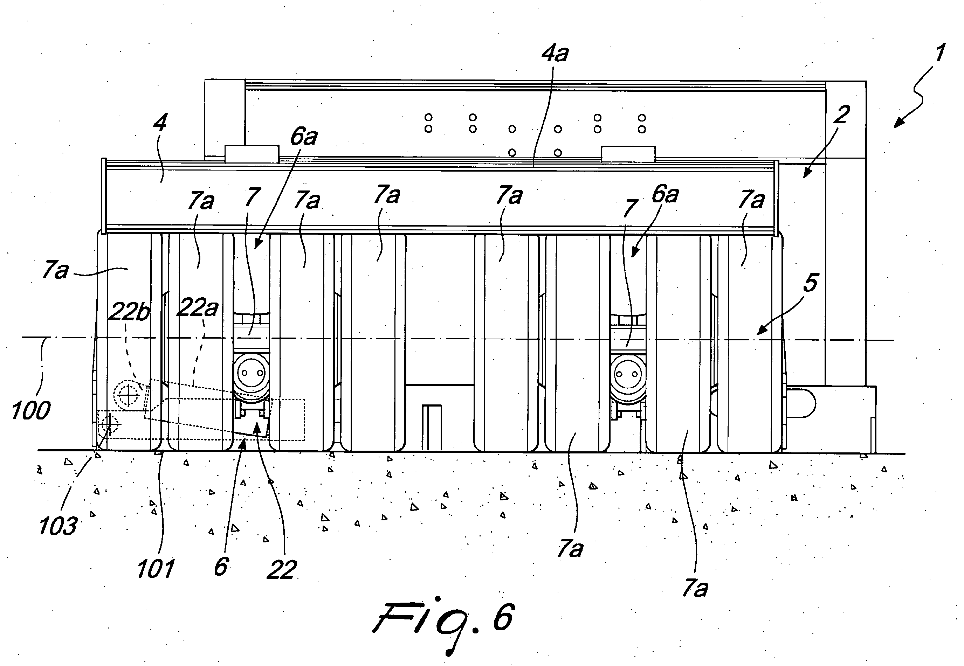

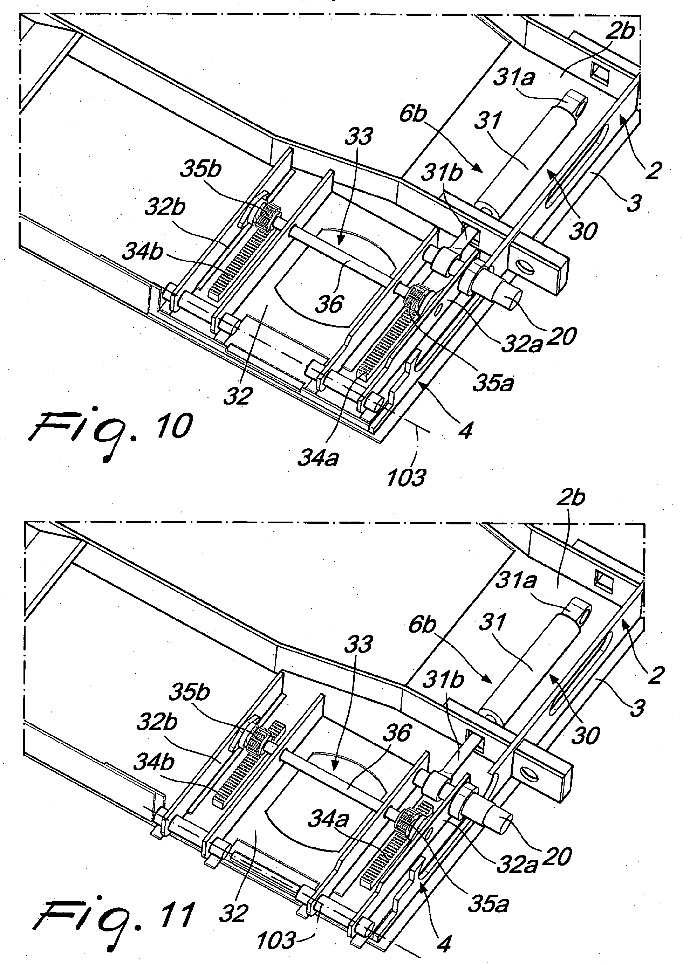

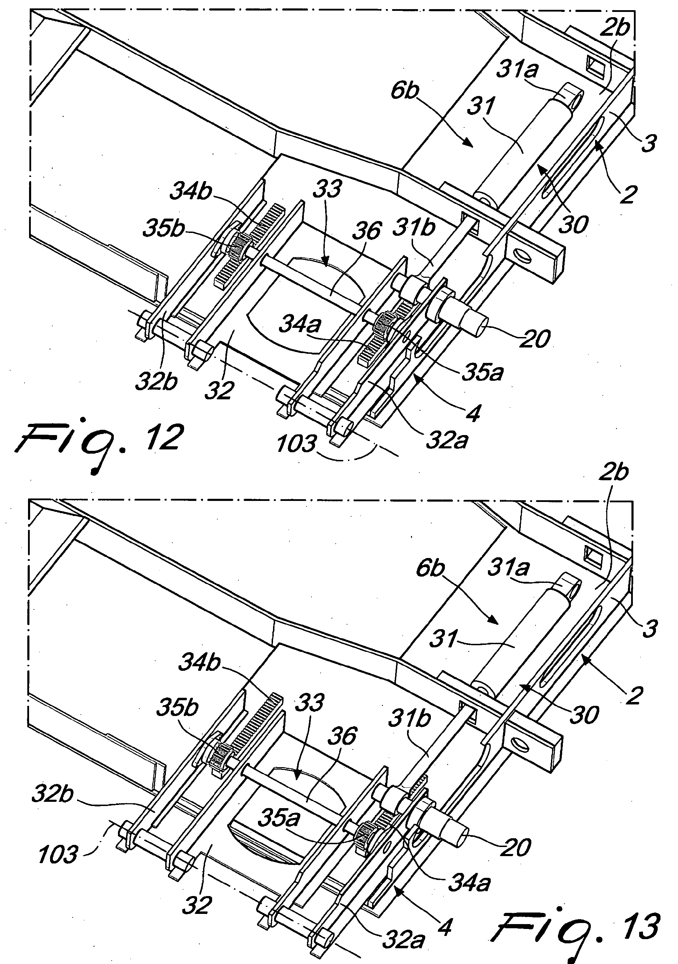

At this point the first actuation means 30 are actuated so as to push, along the direction 100 and outward, the supporting cradle or plate 32, consequently bringing the rear supporting assembly 4 and the wheel assembly 5 connected thereto outward as well (see the sequence shown in Figures 10 to 13, and Figures 5 and 6).

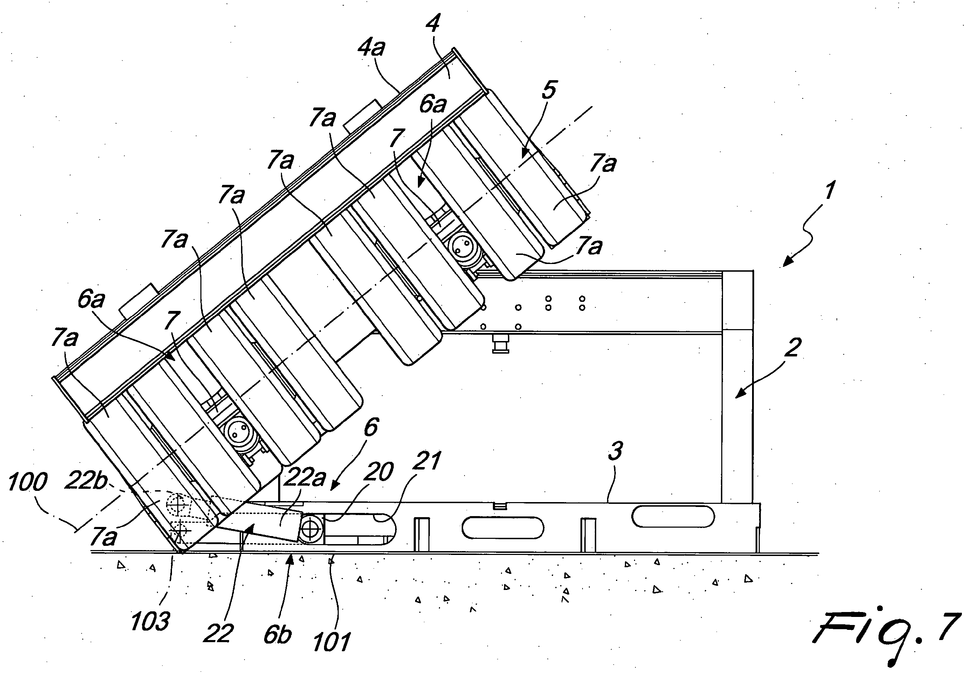

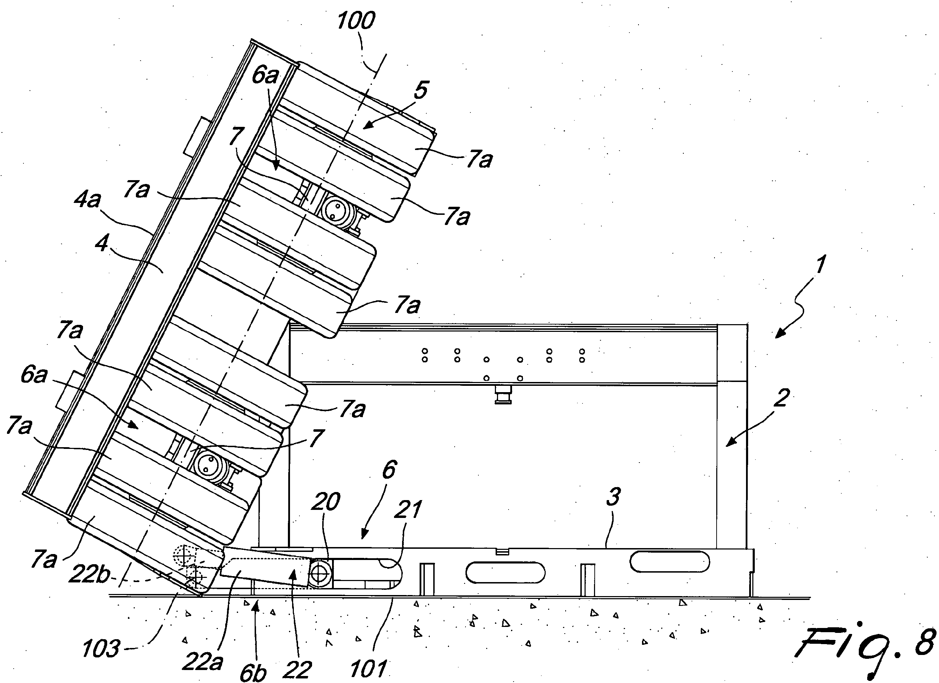

Finally, by actuating the second actuation means 22 we rotate part of the rear supporting assembly 4, and specifically the wheel assembly 5, about the axis 103 (sequence shown in Figures 7, 8 and 9) thus allowing the loading, on the depressed loading deck 3, of the vehicle.

Once the vehicle is loaded we proceed to command the several movement means 6 to return the rear supporting assembly 4 to the transport position.

It has been found that it is possible to perform the loading of the vehicle to be transported in an extremely practical manner without the necessity to detach parts of the semitrailer.

All the characteristics of the invention, indicated above as advantageous, convenient or similar, may also be missing or be substituted by equivalent characteristics.

The individual characteristics set out in reference to general teachings or to specific embodiments may all be present in other embodiments or may substitute characteristics in such embodiments.

In practice it has been found that in all the embodiments the invention has achieved the intended aim and objects.

In practice the materials employed, provided they are compatible with the specific use, and the dimensions and shapes, may be any according to requirements.

Moreover, all the details may be substituted by other, technically equivalent elements.

The disclosures in Italian Patent Application No. VR2012A000154 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A trailer for transporting vehicles, provided with a supporting chassis (2) which can be associated, at its front region (2a), with a tractor (10) and defines, at its rear region (2b), a depressed loading deck (3) which is associated with a respective rear supporting assembly (4) for at least one wheel assembly (5), said trailer comprising movement means (6) which are adapted to move on command said rear supporting assembly (4) with respect to said chassis (2) in order to pass between a transport position, in which said rear supporting assembly (4) defines a rear abutment which is extended above said depressed loading deck (3), and a loading position, in which said rear supporting assembly (4) is arranged laterally to said depressed loading deck (3) in order to allow the loading of a vehicle to be transported, said movement means (6) comprising first movement means (6a), which act between said rear supporting assembly (4) and said wheel assembly (5) and are adapted to move on command said at least one axle (7) toward/away from an upper region (4a) of said rear supporting assembly (4), and second movement means (6b), which act between said rear supporting assembly (4) and said chassis (2) and are adapted to move laterally to said depressed loading deck (3) said rear supporting assembly (4) with said at least one axle (7) raised;
said trailer being **characterized in that** said second movement means (6b) comprise a movement element which is adapted to rotate said rear supporting assembly (4) with respect to said chassis (2) about a pivoting axis (103) which is parallel to the axis of longitudinal extension (102) of said chassis (2).

2. The trailer for transporting vehicles according to claim 1, **characterized in that** it comprises a semitrailer (1).

3. The trailer for transporting vehicles according to one or more of the preceding claims, **characterized in that** said wheel assembly (5) comprises at least one axle (7) which supports at least two wheels (7a), with said rear supporting assembly (4) in the transport position said at least one axle (7) having its direction of extension (100) which lies parallel to the ground (101) and substantially at right angles to the direction of longitudinal extension (102) of said chassis (2).

4. The trailer for transporting vehicles according to one or more of the preceding claims, **characterized in that** with said rear supporting assembly (4) in the loading position, said at least one axle (7) has its direction of extension (100) which lies at right angles to the ground (101) and at right angles to the direction of longitudinal extension (102) of said chassis (2).

5. The trailer for transporting vehicles according to one or more of the preceding claims, **characterized in that** said second movement means (6b) comprise a movement device which is adapted to translate said rear supporting assembly (4) along the direction of extension (100) of said at least one axle (7).

6. The trailer for transporting vehicles according to one or more of the preceding claims, **characterized in that** said second movement means (6b) comprise said movement element and said movement device.

7. The trailer for transporting vehicles according to one or more of the preceding claims, **characterized in that** said movement device comprises first actuation means (30) which act between said chassis (2) and a supporting cradle or plate (32) of said rear supporting assembly (4), and **in that** said movement element comprises second actuation means (22), which act between said supporting cradle or plate (32) and an engagement region that is defined on said rear supporting assembly and is integral with said wheel assembly (5).

8. The trailer for transporting vehicles according to one or more of the preceding claims, **characterized in that** said actuation means (22) comprise a fluid-operated actuation cylinder, in which the cylinder body (22a) is pivoted to a pivot (20) which is defined on said supporting cradle or plate (32) and the stem (22b) is coupled rotatably to a connecting portion which is defined on said rear supporting assembly (4) and is integral with said wheel assembly (5).

9. The trailer for transporting vehicles according to one or more of the preceding claims, **characterized in that** said first actuation means (30) comprise a fluid-operated actuation cylinder (31), in which the cylinder body (31a) is integral with said chassis (2) and a stem (31b) is connected to a first lateral shoulder (32a) of said supporting cradle or plate (32).

10. The trailer for transporting vehicles according to one or more of the preceding claims, **characterized in that** said first movement means (6a), in the transport position, are arranged in front of said wheel assembly (5).

## Patentansprüche

1. Ein Anhänger für den Transport von Fahrzeugen, ausgestattet mit einem tragenden Fahrgestell (2), das in seinem vorderen Bereich (2a) mit einem Zugfahrzeug (10) verbunden werden kann und das in seinem hinteren Bereich (2b) ein vertieftes Ladedeck (3) bestimmt, welches mit einem entsprechenden hinteren tragenden Aufbau (4) für mindestens einen Radaufbau (5) verbunden ist, wobei der Anhänger Bewegungsmittel (6) umfasst, die ausgebildet sind, um auf Befehl den hinteren tragenden Aufbau (4) im Verhältnis zu dem Fahrgestell (2) zu bewegen, um zwischen einer Transportposition, in welcher der hintere tragende Aufbau (4) ein hinteres Widerlager bestimmt, das über das vertiefte Ladedeck (3) verlängert ist, und einer Ladeposition zu wechseln, in welcher der hintere tragende Aufbau (4) seitlich zu dem vertieften Ladedeck (3) angeordnet ist, um das Aufladen eines zu transportierenden Fahrzeugs zu ermöglichen, wobei die Bewegungsmittel (6) erste Bewegungsmittel (6a) umfassen, die zwischen dem hinteren tragenden Aufbau (4) und dem Radaufbau (5) arbeiten und ausgebildet sind, um auf Befehl die mindestens eine Achse (7) zu einem oberen Bereich (4a) des hinteren tragenden Aufbaus (4) oder von ihm fort zu bewegen, und zweite Bewegungsmittel (6b), die zwischen dem hinteren tragenden Aufbau (4) und dem Fahrgestell (2) arbeiten und ausgebildet sind, um den hinteren tragenden Aufbau (4) mit der mindestens einen Achse (7) angehoben seitlich zu dem vertieften Ladedeck (3) zu bewegen;
wobei der Anhänger **dadurch gekennzeichnet ist, dass** die zweiten Bewegungsmittel (6b) ein Bewegungselement umfassen, das ausgebildet ist, um den hinteren tragenden Aufbau (4) mit Bezug auf das Fahrgestell (2) um eine Schwenkachse (103) zu drehen, die parallel zur Achse der Längsausdehnung (102) des Fahrgestells (2) ist.

2. Der Anhänger für den Transport von Fahrzeugen gemäß Anspruch 1, **dadurch gekennzeichnet, dass** er einen Sattelauflieger (1) umfasst.

3. Der Anhänger für den Transport von Fahrzeugen gemäß einem oder mehreren der obigen Ansprüche, **dadurch gekennzeichnet, dass** der Radaufbau (5) mindestens eine Achse (7) umfasst, die mindestens zwei Räder (7a) trägt, wobei die Ausdehnungsrichtung (100) der mindestens einen Achse (7) parallel zum Boden (101) und im Wesentlichen in rechten Winkeln zur Richtung der Längsausdehnung (102) des Fahrgestells (2) ist, wenn sich der hintere tragende Aufbau (4) in der Transportposition befindet.

4. Der Anhänger für den Transport von Fahrzeugen gemäß einem oder mehreren der obigen Ansprüche, **dadurch gekennzeichnet, dass** die Ausdehnungsrichtung (100) der mindestens einen Achse (7) in rechten Winkeln zum Boden (101) und in rechten Winkeln zur Richtung der Längsausdehnung (102) des Fahrgestells (2) ist, wenn sich der hintere tragende Aufbau (4) in der Ladeposition befindet.

5. Der Anhänger für den Transport von Fahrzeugen gemäß einem oder mehreren der obigen Ansprüche, **dadurch gekennzeichnet, dass** die zweiten Bewegungsmittel (6b) eine Bewegungsvorrichtung umfassen, die ausgebildet ist, um den hinteren tragenden Aufbau (4) entlang der Ausdehnungsrichtung (100) der mindestens einen Achse (7) zu verschieben.

6. Der Anhänger für den Transport von Fahrzeugen gemäß einem oder mehreren der obigen Ansprüche, **dadurch gekennzeichnet, dass** die zweiten Bewegungsmittel (6b) das Bewegungselement und die Bewegungsvorrichtung umfassen.

7. Der Anhänger für den Transport von Fahrzeugen gemäß einem oder mehreren der obigen Ansprüche, **dadurch gekennzeichnet, dass** die Bewegungsvorrichtung erste Betätigungsmittel (30) umfasst, die zwischen dem Fahrgestell (2) und einer ersten tragenden BAsisstation oder einer Platte (32) des hinteren tragenden Aufbaus (4) arbeiten, und dadurch, dass das Bewegungselement zweite Betätigungsmittel (22) umfasst, die zwischen der tragenden Haltestation oder der Platte (32) und einem Eingriffsbereich arbeiten, der auf dem hinteren tragenden Aufbau bestimmt und fest mit dem Radaufbau (5) verbunden ist.

8. Der Anhänger für den Transport von Fahrzeugen gemäß einem oder mehreren der obigen Ansprüche, **dadurch gekennzeichnet, dass** die Betätigungsmittel (22) einen fluidbetätigten Arbeitszylinder umfassen, wobei der Zylinderkörper (22a) gelenkig mit einem Drehzapfen (20) verbunden ist, der an der tragenden Basisstation oder der Platte (32) bestimmt ist, und der Schaft (22b) drehbar mit einem Verbindungsabschnitt gekoppelt ist, der an dem hinteren tragenden Aufbau (4) bestimmt und fest mit dem Radaufbau (5) verbunden ist.

9. Der Anhänger für den Transport von Fahrzeugen gemäß einem oder mehreren der obigen Ansprüche, **dadurch gekennzeichnet, dass** die ersten Betätigungsmittel (30) einen fluidbetätigten Arbeitszylinder (31) umfassen, wobei der Zylinderkörper (31a) fest mit dem Fahrgestell (2) verbunden ist und ein Schaft (31b) mit einer ersten seitlichen Schulter (32a) der tragenden Basisstation oder der Platte (32) verbunden ist.

10. Der Anhänger für den Transport von Fahrzeugen gemäß einem oder mehreren der obigen Ansprüche, **dadurch gekennzeichnet, dass** die ersten Bewegungsmittel (6a) in der Transportposition vor dem Radaufbau (5) angeordnet sind.

## Revendications

1. Remorque pour transporter des véhicules, munie d'un châssis de support (2) qui peut être associé, dans sa région avant (2a), à un tracteur (10), et qui définit, dans sa région arrière (2b), un pont de chargement en renfoncement (3) qui est associé à un ensemble de support arrière respectif (4) pour au moins un ensemble de roues (5), ladite remorque comprenant des moyens de mouvement (6) qui sont adaptés pour déplacer sur commande ledit ensemble de support arrière (4) par rapport audit châssis (2) de façon à passer entre une position de transport, dans laquelle ledit ensemble de support arrière (4) définit une butée arrière qui est étendue au-dessus dudit pont de chargement en renfoncement (3), et une position de chargement, dans laquelle ledit ensemble de support arrière (4) est disposé latéralement par rapport audit pont de chargement en renfoncement (3), de façon à permettre le chargement d'un véhicule devant être transporté, lesdits moyens de mouvement (6) comprenant des premiers moyens de mouvement (6a), qui agissent entre ledit ensemble de support arrière (4) et ledit ensemble de roues (5), et qui sont adaptés pour déplacer sur commande ledit au moins un essieu (7) en direction de ou en l'éloignant d'une région supérieure (4a) dudit ensemble de support arrière (4), et des deuxièmes moyens de mouvement (6b), qui agissent entre ledit ensemble de support arrière (4) et ledit châssis (2), et qui sont adaptés pour déplacer latéralement par rapport audit pont de chargement en renfoncement (3), ledit ensemble de support arrière (4) avec ledit au moins un essieu (7) élevé ;
ladite remorque étant **caractérisée en ce que** lesdits deuxièmes moyens de mouvement (6b) comprennent un élément de mouvement qui est adapté pour faire tourner ledit ensemble de support arrière (4) par rapport audit châssis (2) autour d'un axe de pivotement (103) qui est parallèle à l'axe d'extension longitudinale (102) dudit châssis (2).

2. Remorque pour transporter des véhicules selon la revendication 1, **caractérisée en ce qu'**elle comprend une semi-remorque (1).

3. Remorque pour transporter des véhicules selon l'une ou plusieurs des revendications précédentes, **caractérisée en ce que** ledit ensemble de roues (5) comprend au moins un essieu (7) qui supporte au moins deux roues (7a), et, avec ledit ensemble de support arrière (4) dans la position de transport, ledit au moins un essieu (7) ayant sa direction d'extension (100) qui s'étend parallèlement au sol (101) et sensiblement à angle droit par rapport à la direction d'extension longitudinale (102) dudit châssis (2).

4. Remorque pour transporter des véhicules selon l'une ou plusieurs des revendications précédentes, **caractérisée en ce que**, avec ledit ensemble de support arrière (4) dans la position de chargement, ledit au moins un essieu (7) a sa direction d'extension (100) qui s'étend à angle droit par rapport au sol (101) et à angle droit par rapport à la direction d'extension longitudinale (102) dudit châssis (2).

5. Remorque pour transporter des véhicules selon l'une ou plusieurs des revendications précédentes, **caractérisée en ce que** lesdits deuxièmes moyens de mouvement (6b) comprennent un dispositif de mouvement qui est adapté pour faire effectuer une translation audit ensemble de support arrière (4) le long de la direction d'extension (100) dudit au moins un essieu (7).

6. Remorque pour transporter des véhicules selon l'une ou plusieurs des revendications précédentes, **caractérisée en ce que** lesdits deuxièmes moyens de mouvement (6b) comprennent ledit élément de mouvement et ledit dispositif de mouvement.

7. Remorque pour transporter des véhicules selon l'une ou plusieurs des revendications précédentes, **caractérisée en ce que** ledit dispositif de mouvement comprend des premiers moyens d'actionnement (30) qui agissent entre ledit châssis (2) et un berceau ou plaque de support (32) dudit ensemble de support arrière (4), et **en ce que** ledit élément de mouvement comprend des deuxièmes moyens d'actionnement (22), qui agissent entre ledit berceau ou plaque de support (32) et une région de prise qui est définie sur ledit ensemble de support arrière et qui est solidaire dudit ensemble de roues (5).

8. Remorque pour transporter des véhicules selon l'une ou plusieurs des revendications précédentes, **caractérisée en ce que** lesdits moyens d'actionnement (22) comprennent un cylindre d'actionnement actionné par un fluide, dans lequel le corps de cylindre (22a) pivote sur un pivot (20) qui est défini sur ledit berceau ou plaque de support (32) et la tige (22b) est couplée de façon à pouvoir tourner, à une partie de liaison qui est définie sur ledit ensemble de support arrière (4), et qui est solidaire dudit ensemble de roues (5).

9. Remorque pour transporter des véhicules selon l'une ou plusieurs des revendications précédentes, **caractérisée en ce que** lesdits premiers moyens d'actionnement (30) comprennent un cylindre d'actionnement actionné par un fluide (31), dans lequel le corps de cylindre (31a) est solidaire dudit châssis (2) et une tige (31b) est reliée à un premier épaulement latéral (32a) dudit berceau ou plaque de support (32).

10. Remorque pour transporter des véhicules selon l'une ou plusieurs des revendications précédentes, **caractérisée en ce que** lesdits premiers moyens de mouvement (6a), dans la position de transport, sont disposés à l'avant dudit ensemble de roues (5).
